# EUROPEAN PATENT SPECIFICATION

(11) **EP 1 433 645 B1**
(45) Date of publication and mention of the grant of the patent: **24.02.2010**
(21) Application number: 03029243.7
(22) Date of filing: 18.12.2003
(51) Int. Cl.: B60K 11/06, F16H 15/04, B62M 9/04

(54) **V-belt type continuously variable transmission**
Stufenloses regelbares Keilriemengetriebe
Variateur continu de vitesse à courroie trapézoidale

(30) Priority: 26.12.2002 JP 2002376369
(43) Date of publication of application: 30.06.2004
(73) Proprietor: Yamaha Hatsudoki Kabushiki Kaisha, Iwata-shi, Shizuoka-ken (JP)
(72) Inventor: Aoyama, Atsushi, Iwata-shi Shizuoka-ken (JP); Ikeya, Yoshinori, Iwata-shi Shizuoka-ken (JP)
(74) Representative: Grünecker, Kinkeldey, Stockmair & Schwanhäusser Anwaltssozietät

(56) References cited:
- JP-A- 61 274 170
- PATENT ABSTRACTS OF JAPAN vol. 005, no. 006 (M-050), 16 January 1981 (1981-01-16) -& JP 55 139554 A (TOKYO JIDO KIKO KK), 31 October 1980 (1980-10-31)
- PATENT ABSTRACTS OF JAPAN vol. 007, no. 215 (M-244), 22 September 1983 (1983-09-22) -& JP 58 109762 A (HONDA GIKEN KOGYO KK), 30 June 1983 (1983-06-30)
- PATENT ABSTRACTS OF JAPAN vol. 007, no. 254 (M-255), 11 November 1983 (1983-11-11) -& JP 58 137663 A (HONDA GIKEN KOGYO KK), 16 August 1983 (1983-08-16)
- PATENT ABSTRACTS OF JAPAN vol. 2000, no. 12, 3 January 2001 (2001-01-03) -& JP 2000 257704 A (YANMAR AGRICULT EQUIP CO LTD), 19 September 2000 (2000-09-19)
- PATENT ABSTRACTS OF JAPAN vol. 007, no. 024 (M-189), 29 January 1983 (1983-01-29) -& JP 57 176321 A (YAMAHA HATSUDOKI KK), 29 October 1982 (1982-10-29)

## Description

The present invention relates to a V-belt type continuously variable transmission. Such a V-belt type continuously variable transmission can be taken from the prior art document JP 55-139554 A.

In one conventional cooling structure for a V-belt type continuously variable transmission suitable for use in a motorcycle such as a scooter, blower vanes are provided on a pulley constituting the V-belt type continuously variable transmission so that cooling air can be introduced into a transmission case by rotation of the blower vanes,(see for example JP-A-Hei 3-130523)

In the above conventional cooling structure, cooling air is introduced into the transmission case by rotating the blower vanes in the transmission case. However, the transmission case itself is not constituted in view of improving blowing efficiency. Thus, sufficient amount of cooling air cannot be necessarily secured.

Also in the conventional structure, cooling air is introduced into the transmission case from the driving pulley side and discharged from the driven pulley side to simply ventilate the inside of the transmission case. Thus; cooling air is not positively supplied to parts which may develop a problem from the standpoint of heat resistance and thus need to be cooled in particular, such as a V-belt.

It is an objective of the present invention to provide a V-belt type continuously variable transmission as mentioned above having a high cooling efficiency.

According to the present invention, said objective is solved by a V-belt type continuously variable transmission having the features of independent claim 1.

Accordingly, there is provided a cooling structure for a V-belt type continuously variable transmission which can enhance blowing efficiency and increase the amount of cooling air and which can positively supply cooling air to parts which need to be cooled.

Preferably, said case body is formed integrally with a crankcase of an engine associated to said transmission.

According to a preferred embodiment, said first cover is a metal case cover, and said second cover is a resin cover.

According to a preferred embodiment, a bearing boss portion for supporting a bearing for supporting the outside end of said driving shaft is formed integrally with said first cover, said bearing boss portion having an annular ring portion for supporting said bearing and a leg portion for joining said ring portion integrally to a bottom surface of said blower casing.

According to a preferred embodiment, said driving pulley mounted on a driving shaft is disposed on an engine side in the transmission case being adapted to be connected to an engine of a vehicle, said driven pulley mounted on the driven shaft is disposed on a rear wheel side in said transmission case being adapted to be connected to a rear wheel of a vehicle, and said blower fan provided on an outside surface of a half sheave of said driving pulley located on an outer side in said transmission case; and the blower casing is provided on the outer side of said transmission case.

A preferred embodiment is configured to guide cooling air discharged from a discharge port toward a half sheave of said driving pulley located on the inner side in said transmission case.

In consideration of the object there is also proved an engine unit, especially for a scooter type vehicle, comprising an internal combustion engine and a V-belt type continuously variable transmission mentioned above.

Hereinafter, the present invention is illustrated and explained by means of preferred embodiments in conjunction with the accompanying drawings. In the drawings wherein:
- Fig. 1: is a plan view of an engine unit provided with a cooling structure for a V-belt type continuously variable transmission according to an embodiment,
- Fig. 2: is a cross-sectional plan view of a transmission in the above embodiment,
- Fig. 3: is a side view illustrating a case body in the above embodiment,
- Fig. 4: is a side view illustrating a case cover in the above embodiment,
- Fig. 5: is a side view illustrating a resin cover in the above embodiment,
- Fig. 6: is a side view illustrating an element in the above embodiment,
- Fig. 7: is a side view illustrating the case cover in the above embodiment,
- Fig. 8: is a cross-sectional side view (cross-sectional view taken along the line VIII-VIII in Fig. 5) illustrating the installation state of the element in the above embodiment,
- Fig. 9: is a cross-sectional side view (cross-sectional view taken along the line IX-IX in Fig. 5) illustrating the installation state of the element in the above embodiment,
- Fig. 10: is a cross-sectional side view (cross-sectional view taken along the line X-X in Fig. 5) illustrating a lower rear discharge port and around it,
- Fig. 11: is a perspective view illustrating the installation state of the element in the above embodiment,
- Fig. 12: is a side view illustrating the state where the element is removed in the above embodiment,
- Fig. 13: is a perspective view illustrating the state where the element is removed in the above embodiment,
- Fig. 14: is a side view illustrating the state where the resin cover is removed in the above embodiment,
- Fig. 15: is perspective view illustrating the state where the resin cover is removed in the above embodiment, and
- Fig. 16: is a cross-sectional side view illustrating a variation of the element in the above embodiment.

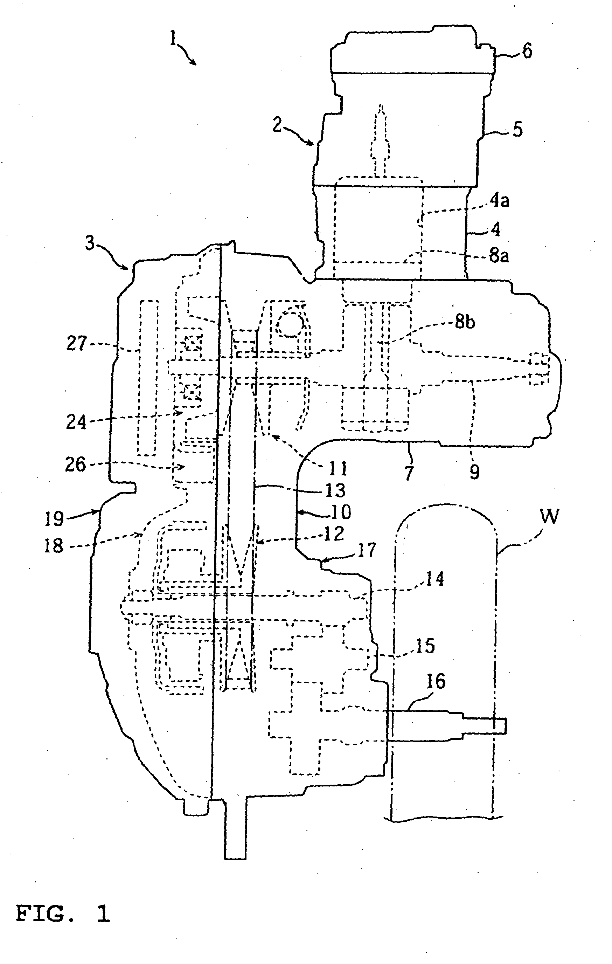

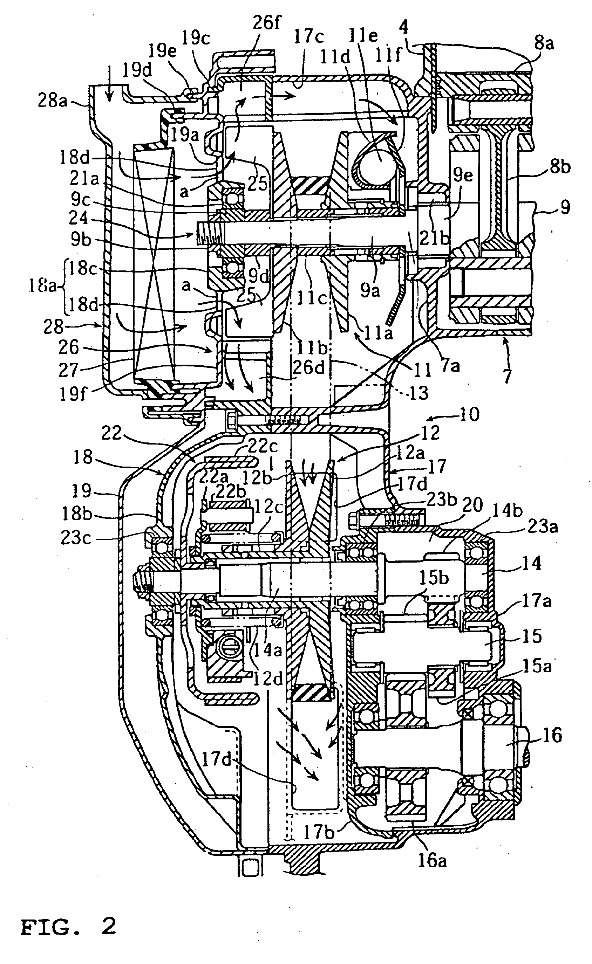

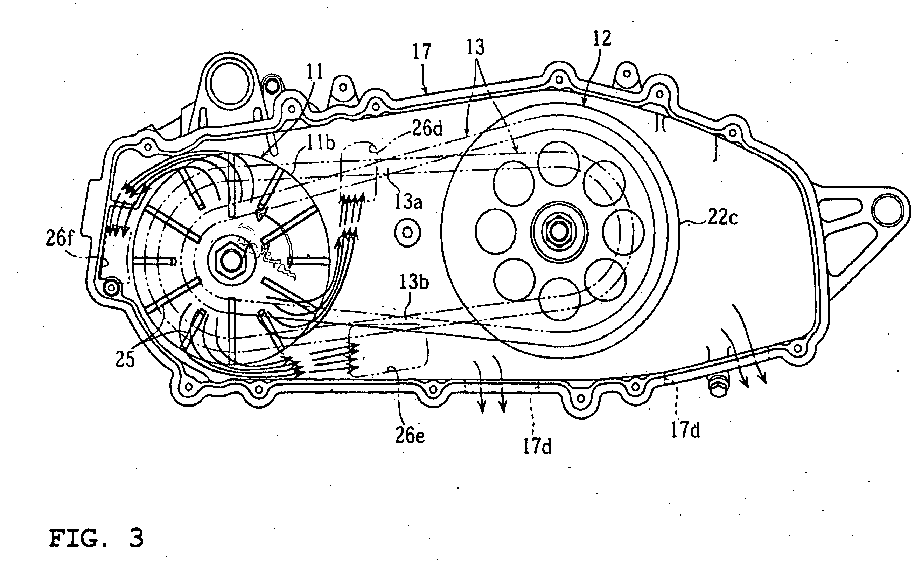

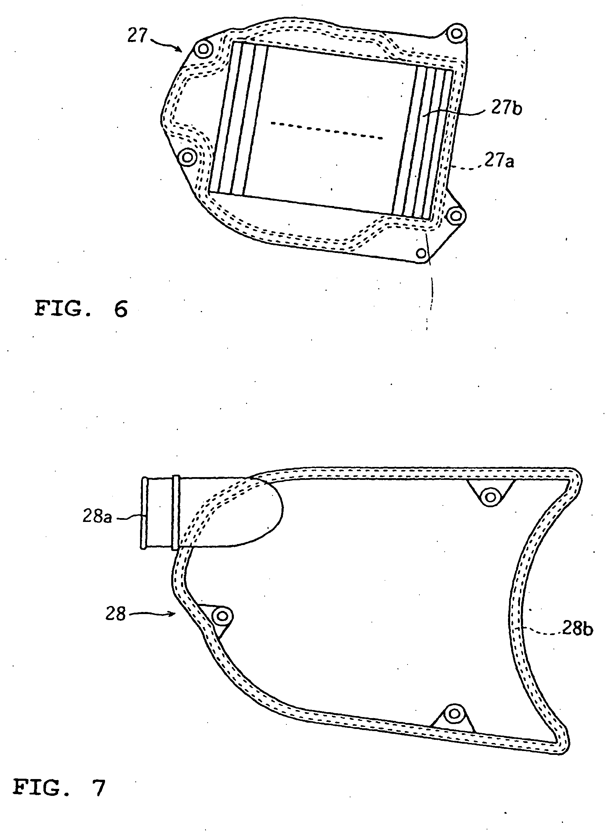

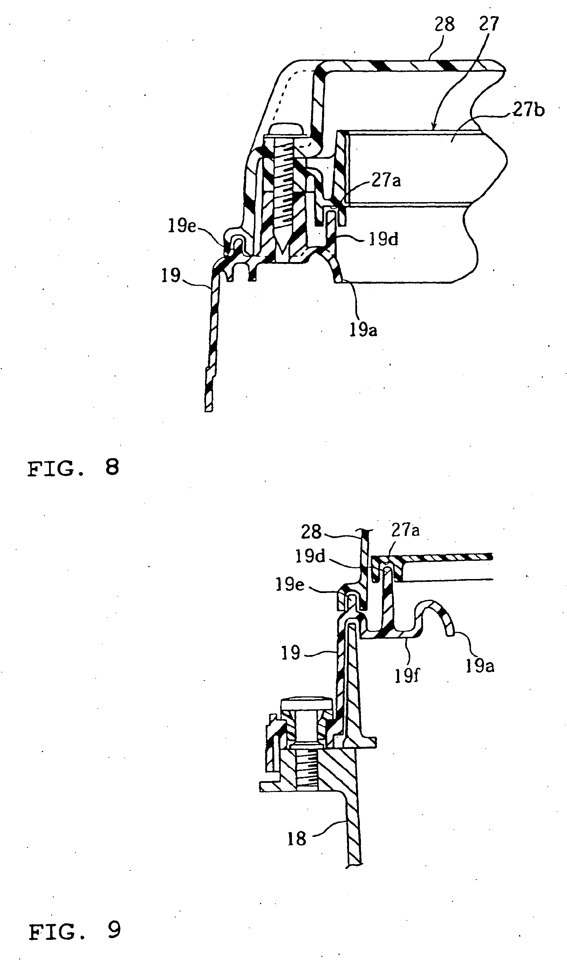

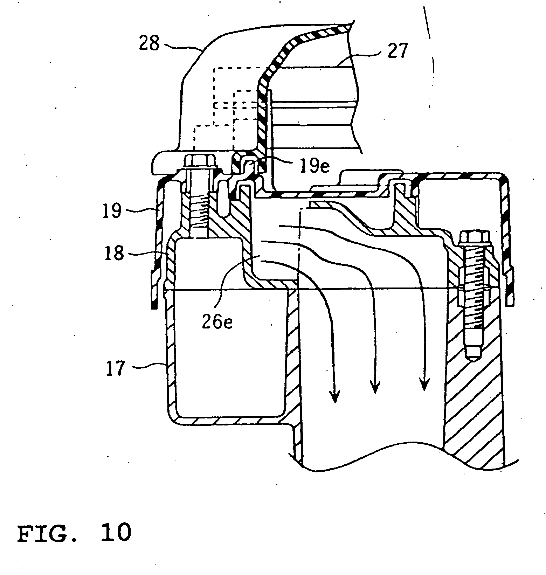

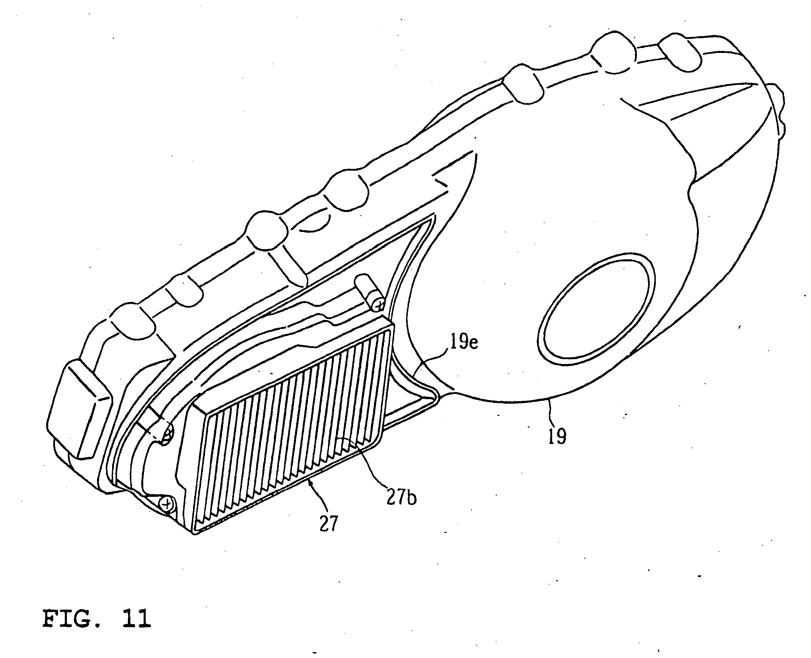

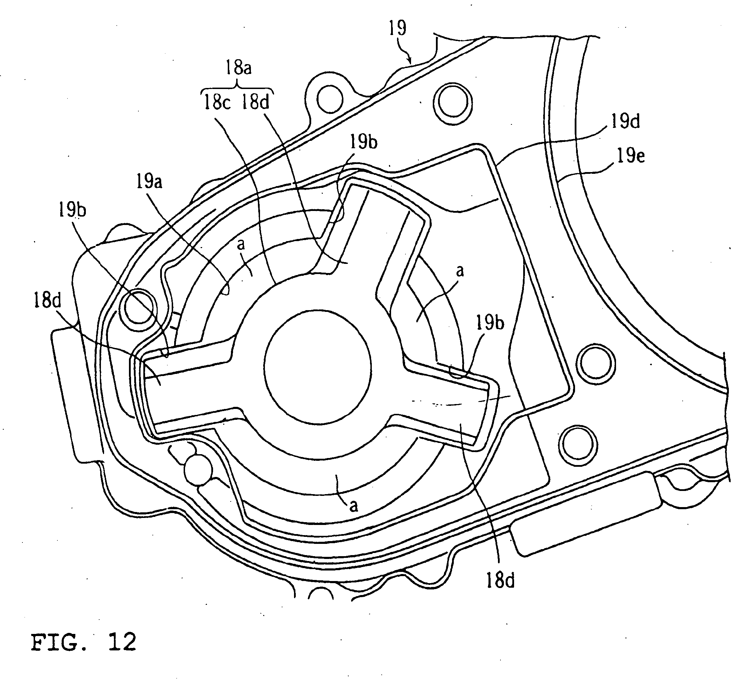

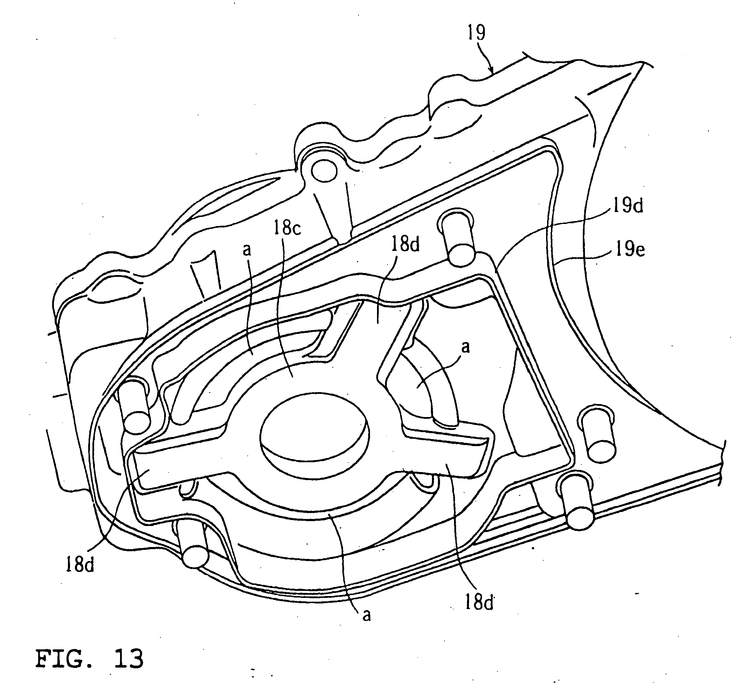

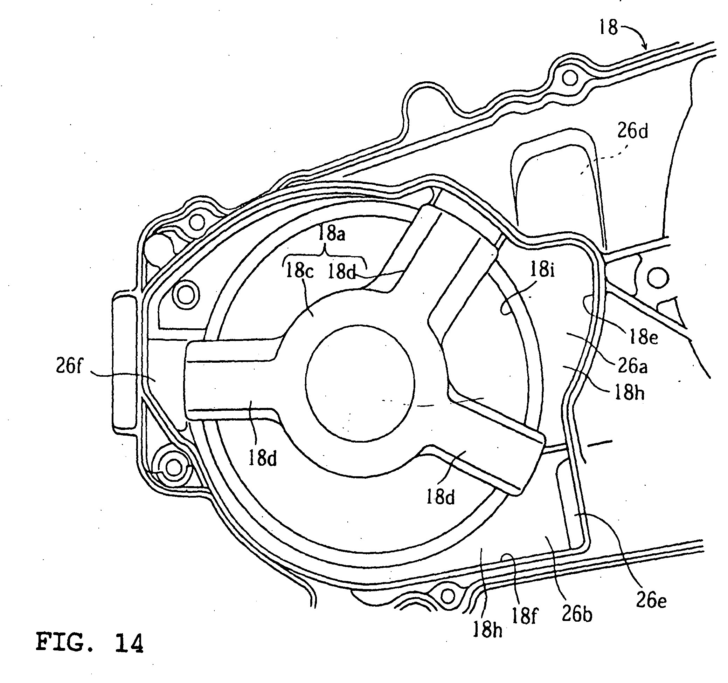

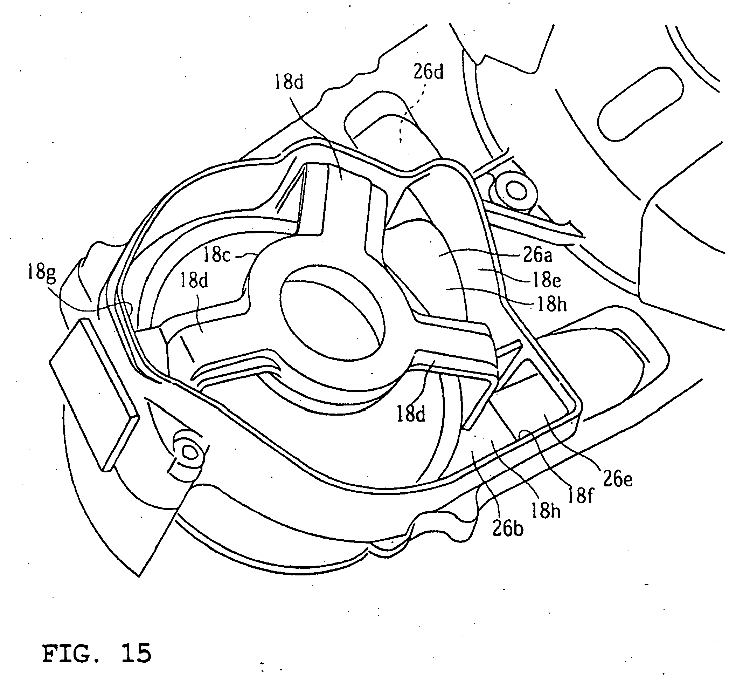

Fig. 1 to Fig. 15 are views for explaining a cooling structure for a V-belt type continuously variable transmission according to an embodiment. Fig. 1 is a plan view of an engine unit, Fig. 2 is a cross-sectional plan view of the continuously variable transmission, Fig. 3 to Fig. 7 are side views of a case body, a case cover, a resin cover, an element, and an element cover, respectively. Fig. 8 to Fig. 10 are cross-sectional side views of an element mounting part, Fig. 11 to Fig. 15 are perspective views illustrating the mounted state of the element, and a cooling air suction port and around it. In this embodiment, the terms, "front", "rear", "right" and "left" are on the front, rear, right and left sides, with the engine unit mounted on a scooter-type motorcycle, viewed from the rider's seat thereof.

In the drawings, designated as 1 is a unit swing type engine unit for a scooter-type motorcycle. The engine unit 1 includes an engine body 2 and a continuously variable transmission 3 which are integrated with each other, and is supported generally at the center of an under born type body frame for vertical swinging movement.

The engine body 2 is disposed with its cylinder axis oriented generally horizontally, and generally includes a crankcase 7 made of an aluminum alloy, a cylinder block 4 and a cylinder head 5 stuck on a front wall of the crankcase 7 and secured thereto, and a head cover 6 removably attached to a front mating surface on the cylinder head 5. A piston 8a slidably inserted in a cylinder bore 4a formed in the cylinder block 4 is connected to a crankshaft 9 disposed in the crankcase 7 and extending in the vehicle width direction by a connecting rod 8b.

The continuously variable transmission 3 has a transmission body housed in a transmission case 10 extending from the left side of the engine body 2 rearward on the left side of the vehicle. The transmission main body generally includes a driving pulley 11 attached to the left end of the crankshaft (driving shaft) 9 located on the engine body side in the transmission case 10, a driven pulley 12 attached to a driven shaft 14 located on the side of a rear wheel W, and a V-belt 13 wrapped around the driving pulley 11 and the driven pulley 12. Rotation of the driven shaft 14 is reduced in speed according to the gear ratio among gears 14b, 15a, 15b and 16a and transmitted to a rear wheel shaft 16 via an intermediate shaft 15 disposed in a gear chamber 20.

The transmission case 10 has a case body 17 formed integrally with the crankcase 7 and extending to the rear wheel shaft 16, an aluminum alloy case cover 18 removably attached on the outside (left side) of the case body 17, and a resin cover 19 covering an outer surface of the case cover 18. The case body 17 has a rear inside wall 17a at a rear portion thereof. The rear inside wall 17a is bulged toward the rear wheel W and an inside cover 17b is attached to the inside of the bulged portion to form the gear chamber 20, which is oil tight.

The crankshaft 9 has a left journal portion 9e journaled through a left wall 7a of the crankcase 7 via a bearing 21 b, and a pulley supporting portion 9a located on the left of the left journal portion 9e and protruded in the transmission case 10. The pulley supporting portion 9a has an end journaled in a bearing boss portion 18a via a bearing 21 a and a spacer 9c.

The bearing boss portion 18a for supporting the end of the crankshaft 9 has an annular ring portion 18c for supporting the bearing 21 a and three leg portion 18d for joining the ring portion 18c integrally to the part of the case cover 18 constituting the bottom wall of a hereinafter-described blower casing 26.

The driving pulley 11 is mounted on the pulley supporting portion 9a of the crankshaft 9. The driving pulley 11 has a movable half sheave of pulley 11 a mounted on a slide pipe 11c rotatable together with the pulley supporting portion 9a for sliding movement in the axial direction of the crankshaft and rotation together with the slide pipe 11c, and a fixed half sheave of pulley 11 b positioned in contact with the end of the slide pipe 11c and securely fixed to the pulley supporting portion 9a with a nut 9b. Designated as 9d is a spacer for filling the gap between the spacer 9c and the fixed half sheave of pulley 11 b in the axial direction. The spacers and are securely fixed to the pulley supporting portion 9a with the nut 9b.

A weight 11e is interposed between a cam plate 11 d disposed on the back side of the movable half shave of pulley 11a and a stopper plate 11f secured to the pulley supporting portion 9a. With increase in the rotational speed of the crankshaft 9, the weight 11e is moved radially outward by centrifugal force to move the cam plate 11d and the movable half sheave of pulley 11a to the left. The effective diameter of the driving pulley 11 is therefore increased and the vehicle speed is increased.

The driven pulley 12 is attached to a pulley supporting portion 14a of the driven shaft 14 protruded from the gear chamber 20 in the transmission case 10, and has a fixed half sheave of pulley 12a mounted on the pulley supporting portion 14a in such a manner as to be rotatable and immovable in the axial direction of the driven shaft, and a movable half sheave of pulley 12b mounted on a supporting pipe portion 12c of the fixed half sheave of pulley 12a for sliding movement in the axial direction of the driven shaft and rotation together with the supporting pipe 12c. The movable half sheave of pulley 12b is urged by an urging spring 12d in such a direction that the effective diameter of the driven pulley 12 increases. The driven shaft 14 has a gear chamber side portion which is journaled through the inner wall 17a and the inside cover 17b via bearings 23a and 23b, respectively, and an end which is journaled in a rear wall 18b of the case cover 18 via a bearing 23c.

A centrifugal clutch 22 is interposed between an end of the supporting pipe 12c and an end of the driven shaft 14. The centrifugal clutch 22 has a weight arm 22a secured to the end of the supporting pipe 12c, a weight 22b attached to the arm 22a for oscillating movement in a radial direction of a circle about an axis parallel to the driven shaft 14, and a cup-shaped outer clutch 22c fixed to the driven shaft 14 side.

With increase in the rotational speed of the driven pulley 12, the weight 22b is moved radially outward and brought into contact with the inner surface of the outer clutch 22c. The rotation of the driven pulley 12 is therefore transmitted to the driven shaft 14.

On the crankshaft 9, a blower fan 24, for introducing air into the transmission case 10 from front, pressurizing the air, feeding the air to necessary parts, and discharging the air from rear, is mounted on the outside of the driving pulley 11 in the axial direction of the crankshaft. The blower fan 24 generally includes a multiplicity of blower vanes 25 and an air guide casing (blower casing) 26 surrounding the blower vanes. The blower fan 24 in this embodiment is rotated counterclockwise as viewed from the left side of the vehicle (the state shown in Fig. 3).

The blower vanes 25 are arranged radially at equal angular intervals as viewed in the axial direction and formed integrally on the outer side of the fixed half shave of pulley 11b. As each of the blower vanes 25 is viewed in a direction perpendicular to the axial direction, the portion on the side of the center of the fixed half sheave of pulley 11b is removed and the portion on the side of the periphery of the fixed half sheave of pulley 11b is protruded outward in the axial direction. The bearing boss portion 18a is located in the portion where the blower vanes 25 are partially removed so that the blower fan 24 can be provided without increasing the dimension in the vehicle width direction.

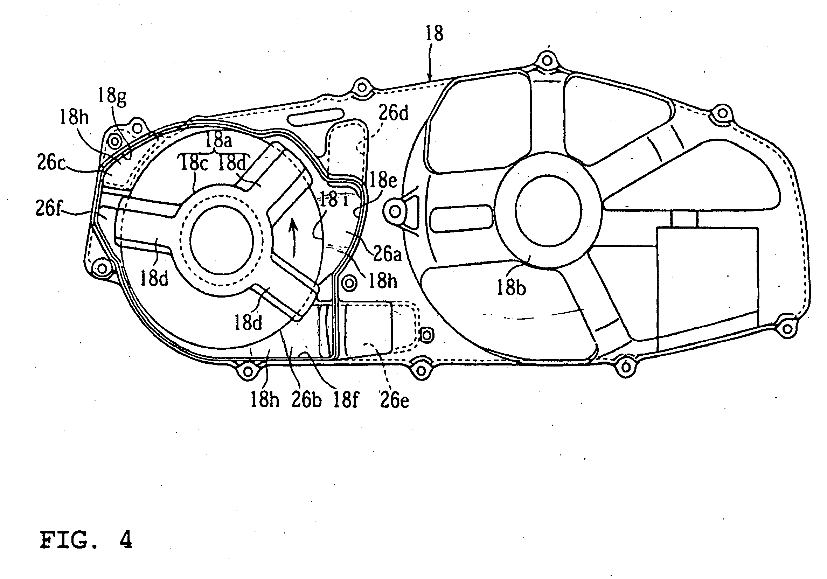

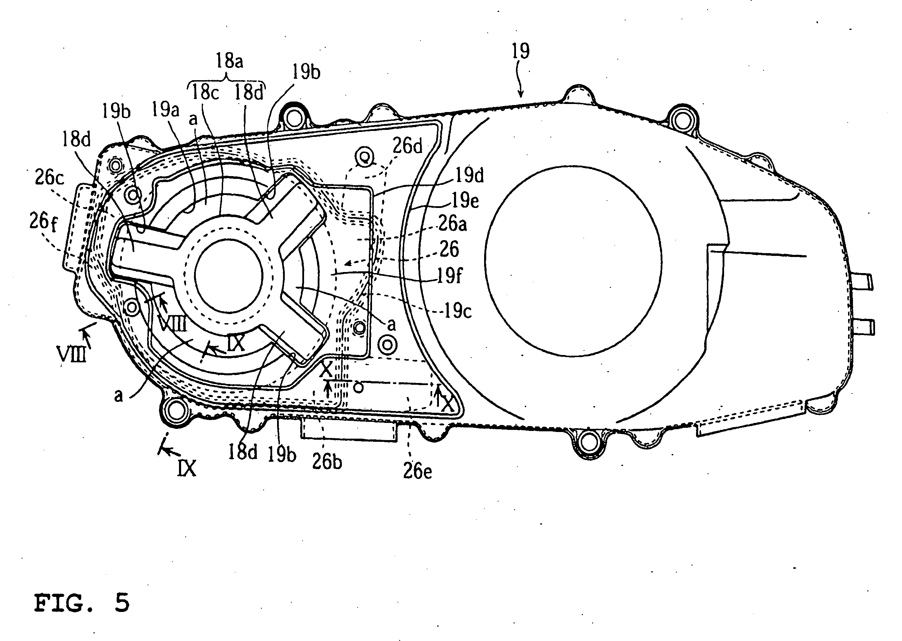

As shown in Fig. 4 and Fig. 5, the air guide casing 26 has a plurality of sets (three sets in this embodiment) of boost passages 26a, 26b and 26c, each farther apart from the blowing vanes 25 than the one upstream thereof in the rotating direction of the blowing vanes 25. Discharge ports 26d to 26f are formed at the downstream ends of the boost passages 26a to 26c, respectively.

As shown in Fig. 3, the discharge ports 26d and 26e of the upper rear boost passage 26a and the lower rear boost passage 26b are placed generally in the middle between the driving pulley 11 and the driven pulley 12 and located in positions facing the portions of the V-belt 13 between the driving pulley 11 and the driven pulley 12 from outside. More specifically, the discharge ports 26d and 26e have generally rectangular shapes. The upper discharge port 26d is positioned with its long sides extending in a direction across the V-belt 13, and the lower discharge port 26e is positioned with its long sides generally parallel to the V-belt 13 and partially overlapped with the V-belt 13.

The discharge port 26f of the front boost passage 26c is so shaped as to direct cooling air inward in the axial direction from a front peripheral portion of the driving pulley 11. The cooling air discharged from the discharge port 26f is supplied through a guide passage 17c formed at a front edge of the case body 17 to the back side of the movable half sheave of pulley 11a.

In Fig. 3, the dot-dash lines show the V-belt 13 in idle state (the speed reduction ratio is maximum) and the V-belt at maximum speed (the speed reduction ratio is minimum). As is clear from the drawing, the V-belt 13 has portions 13a and 13b which hardly change positions whether it is in idle state or at maximum speed generally in the middle between the driving and driven pulleys 11 and 12. In this embodiment, the discharge ports 26d and 26e are oriented toward the portions 13a and 13b of the V-belt 13 which hardly change positions whether at idle state or at maximum speed. Cooling air can therefore be constantly blown onto the V-belt 13 without greatly increasing the size of the discharge ports 26d and 26e, namely with the flow rate of the cooling air maintained at a high level.

The boost passages 26a to 26c are constituted of outer peripheral portions 18e to 18g and a bottom wall 18h which are formed on the case cover 18, and a top wall 19f formed on the resin cover 19. More specifically, the outer peripheral portions 18e and 18g constituting the peripheral edges of the boost passages 26a to 26c are formed on the case cover 18 generally along tangents of the periphery of the driving pulley 11. Each peripheral portion is farther apart from the ends of the blower vanes 25 than the one upstream thereof in the rotating direction of the blower vanes 25. An opening 18i corresponding to the rotation locus of the blowing vanes 25 is formed and the residual portion constitutes the bottom wall 18h. The outer peripheral portions 18e and 18g constituting the boost passages on the case cover 18 are continuous with each other and form a closed loop as a whole. This closed loop is sealingly fitted in a seal groove 19c formed in the inner surface of the resin cover 19 and having the same closed loop shape.

The resin cover 19 has an opening 19a having a diameter greater than that of the ring portion 18c of the bearing boss portion 18a and notches 19b to avoid interference with the leg portion 18d in the part inside the closed loop and opposed to the driving pulley 11. A slit-like space "a" formed between the opening 19a and the ring portion 18c constitutes an air passage.

An element seal rib 19d in the form of a closed loop surrounding the leg portion 18d of the bearing boss portion 18c and a cover seal rib 19e in the form of a closed loop surrounding the element seal rib 19d are integrally formed on the outside surface of the resin cover 19.

The element seal rib 19d is fitted in a seal groove 27a formed in an inner surface of an air cleaner element 27, and the cover seal rib 19e is fitted in a seal groove 28b of an air cleaner cover 28 covering the air cleaner element 27 from outside.

The element 27 has a rectangular element main body 27b disposed inside the annular seal groove 27a. Air is introduced from a suction port 28a of the air cleaner cover 28 and passed through the element body 27b. The air is then introduced to the side of the blower fan 24 through the slit-like space "a", pressurized by rotation of the blower vanes 25, and passed through the boost passages 26a to 26c. Then, the air is discharged from the discharge ports 26d and 26e toward the intermediate portions 13a and 13b of the V-belt 13 which hardly change positions. The air is also discharged from the discharge port 26f and supplied through the guide passage 17c to the back side of the movable half sheave of pulley 11a. Then, the air flows in the transmission case 10 toward the driven pulley 12 and is discharged to the outside through discharge ports 17d and 17d formed through the part of the case body 17 below the driven pulley 12.

As has been described previously, the blower casing 26 surrounding the blower vanes 25 formed on the fixed half sheave of pulley 11b of the driving pulley 11 is provided on the side of the transmission case 10, and has boost passages 26a to 26c, each farther apart from the blower vanes 25 than the one upstream thereof in the rotating direction of the blower vanes, and discharge ports 26d to 26f formed at the downstream ends of the boost passages 26a and 26c, respectively. Thus, cooling air is pressurized by rotation of the blower vanes 25 while being passed through the boost passages 26a to 26c and discharged through the discharge ports 26d to 26f. Therefore, blowing efficiency is enhanced and the amount of cooling air can be considerably increased.

The discharge ports 26d and 26e of the upper rear and lower rear boost passages 26a and 26b are so shaped as to direct cooling air toward the V-belt 13. Thus, the V-belt 13, which is under severe thermal conditions, can be reliably cooled.

In addition, the discharge ports 26d and 26e are so shaped as to direct cooling air toward the vicinity of the intermediate portions 13a and 13b of the V-belt, which are the points where the V-belt 13 in idle state and the V-belt 13 at maximum speed intersect with each other. Thus, cooling air can be supplied to the V-belt 13 over the whole operating region without enlarging the discharge ports 26d and 26e, namely with the flow rate of the cooling air maintained at a high level. The V-belt can be cooled reliably also in this regard.

The cooling air discharged from the discharge port 26f of the boost passage 26c is supplied toward the back side of the movable half sheave of pulley 11 a of the driving pulley 11 located inside in the transmission case through the guide passage 17c. Thus, cooling air can be supplied to the part of the driving pulley 11 where the temperature becomes highest so that the temperature of the part can be prevented from becoming abnormally high.

The blower casing 26 is formed on the side of the transmission case 10 by forming the outer peripheral portions 18e to 18g of the boost passages 26a and 26c on the case cover 18 and covering the outer peripheral portions 18e to 18g with the top wall 19f of the resin cover 19. Thus, the blower casing 26 can be constituted with a simple structure without using a special part.

The bearing boss portion 18 for supporting the outside end of the crankshaft 9 is formed on the case cover 18, and the leg portion 18d of the bearing boss portion 18a are joined integrally to the bottom wall 18h of the blower casing 26. Thus, the blower casing 26 can be provided without increasing the number of parts and the outside end of the crankshaft 9 can be reliably supported.

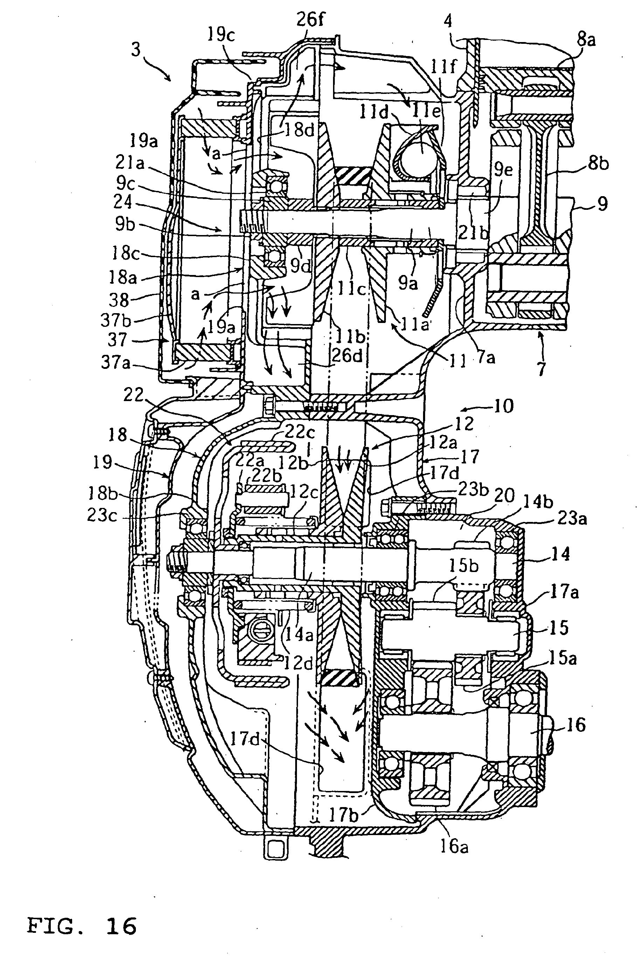

Fig. 16 shows a variation of the arrangement structure of the air cleaner element. In the drawing, the same reference numerals as in Fig. 2 indicate the same or corresponding parts. An air cleaner element 37 in this variation has an annular element body 37a and a lid 37b closing an opening on one side of the element body 37a. An element cover 38 is disposed generally in contact with the lid 37b. Air is introduced into a space around the element body 37b and then flows in directions perpendicular to the axial direction into the element body 37. The air is then sucked into the blowing fan 24 through the slit-like space "a".

In this variation, there is need to provide only a small gap between the element 37 and the element cover 38. Thus, increase in dimension in the vehicle width direction can be prevented.

A cooling structure for a V-belt type continuously variable transmission is provided which can enhance blowing efficiency and increase the amount of cooling air and which can positively supply cooling air to parts which need to be cooled. In particular a cooling structure for a V-belt type continuously variable transmission 3 is provided having a driving pulley 11 mounted on a driving shaft 9 disposed on the engine side in a transmission case 10, a driven pulley 12 mounted on a driven shaft 14 disposed on the rear wheel side in the transmission case, and a V-belt 13 wrapped around the driving pulley and the driven pulley, comprising: a blower fan 24 provided on an outside surface of a half sheave of the driving pulley 11 located on the outer side in the transmission case 10; and a blower casing 26 provided on the side of the transmission case 10 and surrounding the blower fan 24, wherein the blower casing 26 has boost passages 26a to 26c, each farther apart from the blower fan 24 than the one upstream thereof in the rotating direction of the blower vane, and discharge ports 26d to 26f formed at the downstream ends of the boost passages 26a to 26c.

Accordingly it is provided a cooling structure for a V-belt type continuously variable transmission 3 having a driving pulley 11 mounted on a driving shaft 9 disposed on the engine side in a transmission case 10, a driven pulley 12 mounted on a driven shaft 14 disposed on the rear wheel side in said transmission case 10, and a V-belt 13 wrapped around said driving pulley 11 and said driven pulley 12, comprising: a blower fan 24 provided on an outside surface of a half sheave of said driving pulley 11 located on the outer side in said transmission case 10; and a blower casing 26 provided on the side of said transmission case 10 and surrounding said blower fan 24; wherein said blower casing 26 has boost passages 26a-26e, each farther apart from said blower fan 24 than the one upstream thereof in the rotating direction of said blower fan 24, and discharge ports 26d-26f formed at the downstream ends of said boost passages 26a-26e.

Accordingly, a blower casing surrounding a blower fan is provided on the side of the transmission case, and has boost passages, each farther apart from the blower fan than the one upstream thereof in the rotating direction of the blower fan, and discharge ports formed at the downstream ends of the boost passages. Thus, since cooling air is discharged from the discharge port while being pressurized by rotation of the blower fan, blowing efficiency can be improved. The amount of cooling air can be therefore considerably increased as compared with a cooling structure which simply stirs air in a transmission case and ventilate it. Also, by determining the positions of the discharge ports properly, cooling air can be supplied to parts which need to be cooled in particular with high efficiency.

In one embodiment, said transmission case 10 comprises a case body 17 formed integrally with a crankcase 7 of an engine, a metal case cover 18 removably attached to said case body 17, and a resin cover 19 for covering the outside surface of said case cover 18, and wherein said blower casing 26 is formed by covering outer peripheral portions 18e-18g of said boost passages 26a-26e formed on said case cover 18 with said resin cover 19.

Accordingly, the transmission case comprises a case body formed integrally with a crankcase of an engine, a metal case cover removably attached to the case body, and a resin cover for covering the outside surface of the case cover, and the blower casing is formed by covering outer peripheral portions of the boost passages formed on the case cover with the resin cover. Thus, the blower casing can be constituted with a simple structure without using a special part.

In one embodiment, a bearing boss portion 18 for supporting a bearing 21 a for supporting the outside end of said driving shaft 9 is formed integrally with said case cover 18, said bearing boss portion 18 having an annular ring portion 18c for supporting said bearing 21 a and a leg portion 18d for joining said ring portion 18c integrally to a bottom surface of said blower casing 26.

Accordingly, a bearing boss portion for supporting a bearing for supporting the outside end of the driving shaft is formed integrally with the case cover and has and a leg portion joined integrally to a bottom surface of the blower casing. Thus, the blower casing can be provided without increasing the number of parts and the outside end of the driving shaft can be reliably supported.

According to the invention, said discharge ports 26d-26f are so shaped as to direct pressurized cooling air toward said V-belt 13.

Accordingly, the discharge ports are so shaped as to direct pressurized cooling air toward the V-belt. Thus, the V-belt, which is under severe thermal conditions, can be reliably cooled.

Further according to the invention, said discharge ports 26d-26f are so shaped as to direct cooling air toward the vicinity of the points 13a,13b where said V-belt 13 in idle state and said V-belt 13 at maximum speed intersect with each other.

Accordingly, the discharge ports are so shaped as to direct cooling air toward the vicinity of the points where the V-belt in idle state and the V-belt at maximum speed intersect with each other. Thus, cooling air can be supplied to the V-belt over the whole operating region without enlarging the discharge, namely with the flow rate of the cooling air maintained at a high level. The V-belt can be cooled reliably also in this regard.

One embodiment is configured to guide cooling air discharged from a discharge port 26f toward a half sheave 11a of said driving pulley 11 located on the inner side in said transmission case 10.

Accordingly, the cooling structure is configured to guide cooling air discharged from the discharge ports toward a half sheave of the driving pulley located on the inner side in the transmission case. Thus, cooling air can be supplied to the part of the driving pulley where the temperature becomes highest so that the temperature of the part can be prevented from becoming abnormally high.

The embodiments mentioned above are teaching a V-belt type continuously variable transmission having a driving pulley 11 mounted on a driving shaft 9 and a driven pulley 12 mounted on a driven shaft 14 disposed in a transmission case 10. A V-belt 13 is wrapped around said driving pulley 11 and said driven pulley 12. A cooling means comprises a blower fan 24 provided in said transmission case 10, and a blower casing 26 is surrounding said blower fan 24. Said blower casing 26 has boost passages 26a-26e, each farther apart from said blower fan 24 than the one upstream thereof in the rotating direction of said blower fan 24. Discharge ports 26d-26f are formed at the downstream ends of said boost passages 26a-26e.

Said V-belt type continuously variable transmission further comprises a first cover 18 removably attached to a case body 17 of said transmission case 10, and a second cover 19 for covering the outside surface of said first cover 18. Said blower casing 26 is formed by covering outer peripheral portions 18e-18g of said boost passages 26a-26e formed on said first cover 18 with said second cover 19. Said case body 17 is formed integrally with a crankcase 7 of an engine. Said first cover is a metal case cover 18, and said second cover is a resin cover 19.

The V-belt type continuously variable transmission according to the embodiment comprises a bearing boss portion 18 for supporting a bearing 21a for supporting the outside end of said driving shaft 9). Said bearing boss portion 18 is formed integrally with said first cover 18. Said bearing boss portion 18 has an annular ring portion 18c for supporting said bearing 21a and a leg portion 18d for joining said ring portion 18c integrally to a bottom surface of said blower casing 26.

Said driving pulley 11 mounted on a driving shaft 9 is disposed on an engine side in the transmission case 10. Said driven pulley 12 mounted on the driven shaft 14 is disposed on a rear wheel side in said transmission case 10. Said blower fan 24 is provided on an outside surface of a half sheave 11b of said driving pulley 11 located on an outer side in said transmission case 10. The blower casing 26 is provided on the outer side of said transmission case 10.

Said discharge ports 26d-26f are so shaped as to direct pressurized cooling air toward said V-belt 13. Said discharge ports 26d-26f are so shaped as to direct cooling air toward the vicinity of the points 13a,13b where said V-belt 13 in idle state and said V-belt 13 at maximum speed intersect with each other. The V-belt type continuously variable transmission is configured to guide cooling air discharged from said discharge ports 26d-26f toward a half sheave 11a of said driving pulley 11 located on the inner side in said transmission case 10.

The embodiments mentioned above are further teaching an engine unit, especially for a scooter type vehicle, comprising an internal combustion engine and a V-belt type continuously variable transmission according to the embodiments.

## Claims

1. A V-belt type continuously variable transmission having a driving pulley (11) mounted on a driving shaft (9) and a driven pulley (12) mounted on a driven shaft (14) disposed in a transmission case (10), and a V-belt (13) wrapped around said driving pulley (11) and said driven pulley (12),
a cooling means comprising a blower fan (24) provided in said transmission case (10), and a blower casing (26) surrounding said blower fan (24), wherein
a case cover (18) is removably attached to a case body (17) of said transmission case (10) forming boost passages (26a-26c) by outer peripheral portions (18e-18g) and a bottom wall (18h) thereof in conjunction with a second cover (19) covering the outside surface of the case cover (18), wherein said blower casing (26) is formed by covering said outer peripheral portions (18e-18g) of the case cover (18) with said second cover (19) and discharge ports (26d-26f) are formed at the downstream ends of said boost passages (26a-26c) and discharge ports are shaped to direct cooling air toward the vicinity of the points where said V-belt (13) in idle state and at maximum speed intersect with each other.

2. A V-beit type continuously variable transmission according to claim 1, **characterized in that** said case body (17) is formed integrally with a crankcase (7) of an engine.

3. A V-belt type continuously variable transmission according to claim 1 or 2, **characterized in that** said first cover is a metal case cover (18), and said second cover is a resin cover (19).

4. A V-belt type continuously variable transmission according to at least one of the claims 2 to 3, **characterized in that** a bearing boss portion (18) for supporting a bearing (21a) for supporting the outside end of said driving shaft (9) is formed integrally with said first cover (18), said bearing boss portion (18) having an annular ring portion (18c) for supporting said bearing (21 a) and a leg portion (18d) for joining said ring portion (18c) integrally to a bottom surface of said blower casing (26).

5. A V-belt type continuously variable transmission according to at least one of the claims 1 to 4, **characterized in that** said driving pulley (11) mounted on a driving shaft (9) is disposed on an engine side in the transmission case (10), said driven pulley (12) mounted on the driven shaft (14) is disposed on a rear wheel side in said transmission case (10), and said blower fan (24) provided on an outside surface of a half sheave (11b) of said driving pulley (11) located on an outer side in said transmission case (10); and the blower casing (26) is provided on the outer side of said transmission case (10).

6. A V-belt type continuously variable transmission according to at least one of the claims 1 to 5, configured to guide cooling air discharged from a discharge port (26f) toward a half sheave (11a) of said driving pulley (11) located on the inner side in said transmission case (10).

7. An engine unit, especially for a scooter type vehicle, comprising an internal combustion engine and a V-belt type continuously variable transmission according to at least one of the claims 1 to 6.

## Patentansprüche

1. Stufenlos veränderbares Getriebe vom Keilriemen- Typ mit einer Antriebsriemenscheibe (11), montiert auf einer Antriebswelle (9), und einer Abtriebsriemenscheibe (12), montiert auf einer Abtriebswelle (14), angeordnet in einem Getriebegehäuse (10), und einem Keilriemen (13), der um die Antriebsriemenscheibe (11) und die Abtriebsriemenscheibe (12) geschlungen ist,
einer Kühleinrichtung, aufweisend einen Gebläselüfter (24), vorgesehen in dem Getriebegehäuse (10), und einem Gebläsegehäuse (26), das den Gebläselüfter (24) umgibt, wobei
eine Gehäuseabdeckung (18) entfernbar mit einem Gehäusekörper (17) des Getriebegehäuses (10) verbunden ist, wobei Schubkanäle (26a - 26c) durch äußere Umfangsabschnitte (18e - 18g) und eine Bodenwand (18h) desselben in Verbindung mit einer zweiten Abdeckung (19), die die äußere Oberfläche der Gehäuseabdeckung (18) abdeckt, gebildet sind, wobei das Gebläsegehäuse (26) gebildet ist durch Abdecken der äußeren Umfangsabschnitte (18e - 18g) der Gehäuseabdeckung (18) mit der zweiten Abdeckung (19) und Auslassöffnungen (26d - 26f) an den stromabwärtigen Enden der Schubkanäle (26a - 26c) gebildet sind und Auslassöffnungen geformt sind, um Kühlluft in Richtung zu der Nähe der Punkte zu richten, wo der Keilriemen (13) im Leerlaufzustand und bei maximaler Drehzahl sich kreuzt.

2. Stufenlos veränderbares Getriebe vom Keilriemen- Typ nach Anspruch 1, **dadurch gekennzeichnet, dass** der Gehäusekörper (17) mit einem Kurbelgehäuse (7) einer Brennkraftmaschine einstückig gebildet ist.

3. Stufenlos veränderbares Getriebe vom Keilriemen- Typ nach Anspruch 1 oder 2, **dadurch gekennzeichnet, dass** die erste Abdeckung eine Metallgehäuseabdeckung (18) ist und die zweite Abdeckung eine Kunstharzabdeckung (19) ist.

4. Stufenlos veränderbares Getriebe vom Keilriemen- Typ nach zumindest einem der Ansprüche 1 bis 3, **dadurch gekennzeichnet, dass** ein Lagernabenabschnitt (18) zum Lagern eines Lagers (21 a) zum Lagern des äußeren Endes der Antriebswelle (9) einstückig mit der ersten Abdeckung (18) gebildet ist, wobei der Lagernabenabschnitt (18) einen ringförmigen Ringabschnitt (18c) zum Lagern des Lagers (21 a) und einen Schenkelabschnitt (18d) zum Verbinden des Ringabschnittes (18c) einstückig mit einer Unterseite des Gebläsegehäuses (26) hat.

5. Stufenlos veränderbares Getriebe vom Keilriemen- Typ nach zumindest einem der Ansprüche 1 bis 4, **dadurch gekennzeichnet, dass** die Antriebsriemenscheibe (11), montiert auf einer Antriebswelle (9), auf einer Seite der Brennkraftmaschine in dem Getriebegehäuse (10) angeordnet ist, die Abtriebsriemenscheibe (12), montiert auf der Abtriebswelle (14), auf einer Hinterradseite in dem Getriebegehäuse (10) angeordnet ist und der Gebläselüfter (24), vorgesehen auf einer Außenoberfläche einer Scheibenhälfte (11 b) der Antriebsriemenscheibe (11), auf einer Außenseite in dem Getriebegehäuse (10) angeordnet ist; und das Gebläsegehäuse (26) auf der Außenseite des Getriebegehäuses (10) vorgesehen ist.

6. Stufenlos veränderbares Getriebe vom Keilriemen- Typ nach zumindest einem der Ansprüche 1 bis 5, konfiguriert, Kühlluft, abgegeben von einer Auslassöffnung (26f) in Richtung zu einer Scheibenhälfte (11a) der Antriebsriemenscheibe (11), angeordnet auf der Innenseite in dem Getriebegehäuse (10), zu führen.

7. Motoreinheit, insbesondere für ein Fahrzeug vom Roller- Typ, aufweisend eine Brennkraftmaschine und ein stufenlos veränderbares Getriebe vom Keilriemen-Typ nach zumindest einem der Ansprüche 1 bis 6.

## Revendications

1. Transmission à variation continue de type à courroie trapézoïdale ayant une poulie motrice (11) montée sur un arbre moteur (9) et une poulie menée (12) montée sur un arbre mené (14) disposées dans un carter de transmission (10), et une courroie trapézoïdale (13) enroulée autour de ladite poulie motrice (11) et de ladite poulie menée (12),
des moyens de refroidissement comportant un ventilateur soufflant (24) agencé dans ledit carter de transmission (10), et un carter de soufflante (26) entourant ledit ventilateur soufflant (24),
dans laquelle un couvercle de carter (18) est fixé de manière amovible sur un corps de carter (17) dudit carter de transmission (10) en formant des passages de suralimentation (26a à 26c) par l'intermédiaire de parties périphériques extérieures (18e à 18g) et d'une paroi de fond (18h) de celui-ci en association avec un second couvercle (19) recouvrant la surface extérieure du couvercle de carter (18),
dans laquelle ledit carter de soufflante (26) est formé en recouvrant lesdites parties périphériques extérieures (18e à 18g) du couvercle de carter (18) à l'aide dudit second couvercle (19) et des orifices d'évacuation (26d à 26f) sont formés aux extrémités aval desdits passages de suralimentation (26a à 26c) et les orifices d'évacuation sont formés pour diriger de l'air de refroidissement vers le voisinage des points où ladite courroie trapézoïdale (13) à l'état de ralenti et à vitesse maximale se rencontrent.

2. Transmission à variation continue de type à courroie trapézoïdale selon la revendication 1, **caractérisée en ce que** ledit corps de carter (17) est formé en un seul bloc avec un carter (7) d'un moteur.

3. Transmission à variation continue de type à courroie trapézoïdale selon la revendication 1 ou 2, **caractérisée en ce que** ledit premier couvercle est un couvercle de carter en métal (18), et ledit second couvercle est un couvercle en résine (19).

4. Transmission à variation continue de type à courroie trapézoïdale selon au moins une des revendications 1 à 3, **caractérisée en ce qu'**une partie de bossage de palier (18) destinée à supporter un palier (21a) pour supporter l'extrémité extérieure dudit arbre moteur (9) est formée en un seul bloc avec ledit premier couvercle (18), ladite partie de bossage de palier (18) ayant une partie de bague annulaire (18c) pour supporter ledit palier (21a) et une partie de patte (18d) pour assembler ladite partie de bague (18c) d'un seul tenant avec une surface de fond dudit carter de soufflante (26).

5. Transmission à variation continue de type à courroie trapézoïdale selon au moins une des revendications 1 à 4, **caractérisée en ce que** ladite poulie motrice (11) montée sur un arbre moteur (9) est disposée sur un côté de moteur dans le carter de transmission (10), ladite poulie menée (12) montée sur l'arbre mené (14) est disposée sur un côté de roue arrière dans ledit carter de transmission (10), et ledit ventilateur soufflant (24) est agencé sur une surface extérieure d'une demie gorge (11b) de ladite poulie motrice (11) située sur un côté extérieur dans ledit carter de transmission (10), et le carter de soufflante (26) est agencé sur le côté extérieur dudit carter de transmission (10).

6. Transmission à variation continue de type à courroie trapézoïdale selon au moins une des revendications 1 à 5, configurée pour guider de l'air de refroidissement évacué à partir d'un orifice d'évacuation (26f) vers une demie gorge (11a) de ladite poulie motrice (11) située sur le côté intérieur dans ledit carter de transmission (10).

7. Groupe moteur, en particulier pour un véhicule de type scooter, comportant un moteur à combustion interne et une transmission à variation continue de type à courroie trapézoïdale selon au moins une des revendications 1 à 6.
